# EUROPEAN PATENT APPLICATION

(11) **EP 4 836 061 A1**
(43) Date of publication of application: **04.11.2026**
(21) Application number: 24912265.6
(22) Date of filing: 05.12.2024
(51) Int. Cl.: H01M 10/058, H01M 4/139, H01M 10/0562

(54) **METHOD FOR MANUFACTURING ALL-SOLID-STATE BATTERY, AND APPARATUS FOR MANUFACTURING ALL-SOLID-STATE BATTERY**

(30) Priority: 27.12.2023 JP 2023222029
(71) Applicant: SUZUKI MOTOR CORPORATION, Hamamatsu-shi, Shizuoka 432-8611 (JP)
(72) Inventor: FUKUI, Hideyuki, Osaka-shi, Osaka 559-8559 (JP)
(74) Representative: Grünecker Patent- und Rechtsanwälte PartG mbB
(86) International application number: PCT/JP2024/042999
(87) International publication number: WO 2025/142375

(57) **Abstract**

A method of producing an all-solid-state battery 1 includes: a block forming step of compressing a powder material to form a block B; an electrode laminate forming step of producing a powder by subjecting the block B to a removal process, and depositing the powder on a substrate F1 to form an electrode laminate 2; and a laminating step of laminating the electrode laminate 2 and a current collector 3.

## Description

### TECHNICAL FIELD

The present invention relates to a method of producing an all-solid-state battery and a production apparatus for producing an all-solid-state battery.

### BACKGROUND ART

Conventionally, there has been a known method of forming a functional powder film (powder film) by using an electrostatic screen printer (see Patent Document 1 below).

### Citation List

### Patent Document

Patent Document 1: Japanese Unexamined Patent Publication No. 2012-140016

### SUMMARY OF THE INVENTION

### PROBLEM TO BE SOLVED BY THE INVENTION

In the electrostatic screen printer as described in Patent Document 1, when the powder has low fluidity, the powder forms a block before being supplied to the screen, or the screen is clogged. This may make the powder supply to the substrate unstable, or may make the thickness of the powder film uneven (may lower the thickness accuracy).

When the powder supply to the substrate is unstable, this may make it impossible to form a powder layer with a desired thickness. Furthermore, when the powder film has an uneven thickness, this may lead to a negative impact on the battery performance, such as a decrease in charge and discharge efficiency or a decrease in longevity.

The present invention provides a method of producing an all-solid-state battery and a production apparatus for producing an all-solid-state battery, both of which stabilize the amount of the powder supplied to the substrate in the electrode laminate forming step, and thus can form a powder layer with a uniform thickness.

### MEANS FOR SOLVING THE PROBLEM

The present invention [1] includes a method of producing an all-solid-state battery, the method including: a block forming step of compressing a powder material to form a block; an electrode laminate forming step of producing a powder by subjecting the block to a removal process, and depositing the powder on a substrate to form an electrode laminate; and a laminating step of laminating the electrode laminate and a current collector.

According to such a method, the block of the powder material is subjected to the removal process, and then the resulting powder is deposited on the substrate in the electrode laminate forming step.

Therefore, it is possible to lower the impact of the physical properties of the powder, such as fluidity, and thus control the amount of the powder to be supplied to the substrate depending on the amount of the block shaved.

As a result, it is possible to stabilize the amount of the powder supplied onto the substrate, and thus form a powder layer with a uniform thickness.

The present invention [2] includes the method described in the above-described [1], wherein in the block forming step, the powder material is pressure-formed.

According to such a method, it is possible to homogenize the density of the block, stabilize the amount of the powder supplied onto the substrate, and thus make the thickness of the powder layer uniform.

The present invention [3] includes the method described in the above-described [2], wherein in the block forming step, the powder material is pressure-formed by vibration press.

According to such a method, it is possible to further homogenize the density of the block, further stabilize the amount of the powder supplied onto the substrate, and thus further make the thickness of the powder layer uniform.

The present invention [4] includes the method described in the above-described [2] or [3], wherein in the block forming step, the powder material is pressure-formed at 100 MPa or less.

According to such a method, it is possible to suppress an excessive hardening of the block, and thus facilitate the removal process of the block in the electrode laminate forming step.

The present invention [5] includes the method described in any one of the above-described [1] to [4], wherein in the electrode laminate forming step, the powder produced by subjecting the block to a removal process is moved onto the substrate by electrostatic force.

According to such a method, it is possible to guide the powder produced by the removal process of the block onto the substrate by electrostatic force.

The present invention [6] includes a production apparatus for producing an all-solid-state battery, the production apparatus used in the method described in any one of the above-described [1] to [5], the production apparatus including: a block supporting member that supports the block; a support table that is disposed away from the block supporting member, and supports the substrate; and a removal process member that subjects the block supported by the block supporting member to a removal process.

According to such a configuration, it is possible to subject the block of the powder material to the removal process, and deposit the resulting powder on the substrate.

Therefore, it is possible to control the amount of the powder to be supplied onto the substrate depending on the block shaved.

As a result, it is possible to stabilize the amount of the powder supplied onto the substrate.

The present invention [7] includes the production apparatus described in the above-described [6], further including: a pressing member that presses the block supported by the block supporting member toward the removal process member.

According to such a configuration, it is possible to stabilize the contact of the block with the removal process member.

The present invention [8] includes the production apparatus described in the above-described [6] or [7], further including: a mask member that is disposed between the block supporting member and the substrate, and has an opening through which the powder produced by subjecting the block to a removal process is allowed to pass.

According to such a configuration, it is possible to deposit the powder on the substrate into the shape in conformity with the opening of the mask member.

The present invention [9] includes the production apparatus described in any one of the above-described [6] to [8], wherein the block supporting member is fixed with respect to the support table, and wherein the removal process member is capable of sliding, rotating, or vibrating with respect to the block supporting member.

The present invention [10] includes the production apparatus described in any one of the above-described [6] to [8], wherein the removal process member is fixed with respect to the support table, and wherein the block supporting member is capable of sliding, rotating, or vibrating with respect to the removal process member.

The present invention [11] includes the production apparatus described in any one of the above-described [6] to [10], wherein the production apparatus includes a plurality of the removal process members having different shapes from each other.

According to such a configuration, it is possible to optimize the speed at which the block is shaved or the uniformity of the thickness of the powder layer by switching a plurality of removal process members.

The present invention [12] includes the production apparatus described in any one of the above-described [6] to [11], further including: a measurement member for measuring a thickness of the block supported by the supporting member.

According to such a configuration, it is possible to calculate the amount of the block shaved by measuring the thickness of the block supported by the block supporting member.

Furthermore, it is possible to calculate the amount of the powder deposited and the thickness of the powder layer from the amount of the block shaved.

The present invention [13] includes the production apparatus described in any one of the above-described [6] to [12], wherein the support table is capable of sliding or rotating while supporting the substrate.

According to such a configuration, it is possible to deposit the powder on a large area of the substrate by the slide or rotation of the support table while the support table supports the substrate.

### EFFECTS OF THE INVENTION

According to the method of producing an all-solid-state battery of the present invention and the production apparatus for producing an all-solid-state battery of the present invention, it is possible to stabilize the amount of the powder supplied onto the substrate and form a powder layer with a uniform thickness in the electrode laminate forming step.

### BRIEF DESCRIPTION OF THE DRAWINGS

FIG. 1A is a plan view of an all-solid-state battery as one embodiment of the present invention. FIG. 1B is a cross-sectional view of the all-solid-state battery shown in FIG. 1A, taken along line A-A.
FIG. 2A is a cross-sectional view of the layer structure of the electrode laminate shown in FIG. 1B. FIG. 2B is an enlarged view of the all-solid-state battery shown in FIG. 1B.
FIG. 3A is a plan view of the positive current collector shown in FIG. 2B. FIG. 3B is a cross-sectional view of the positive current collector shown in FIG. 3A, taken along line B-B.
FIG. 4 is a cross-sectional view of the all-solid-state battery shown in FIG. 1A, taken along line C-C.
FIG. 5A and FIG. 5B are process diagrams for describing a method of producing an all-solid-state battery. FIG. 5A shows a step of forming a positive electrode layer on the first substrate in an electrode laminate forming step. FIG. 5B shows a step of forming a solid electrolyte layer on the positive electrode layer in the electrode laminate forming step.
FIG. 6A to FIG. 6C are process diagrams for describing the method of producing an all-solid-state battery, following FIG. 5B. FIG. 6A shows the electrode laminate produced by the electrode laminate forming step. FIG. 6B shows a press step. FIG. 6C shows a peeling step.
FIG. 7 is a perspective view of a production apparatus that can be used in the electrode laminate forming step.
FIG. 8 is an explanatory view for describing the structure of the production apparatus shown in FIG. 7.
FIG. 9 shows an example of a removal process member having a blade, which is a modified example of the removal process member shown in FIG. 7.
FIG. 10A and FIG. 10B show a modified example of the removal process member shown in FIG. 7. FIG. 10A shows an example of a removal process member having a blade. FIG. 10B is a cross-sectional view of the removal process member shown in FIG. 10A, taken along line D-D.
FIG. 11 shows a removal process member having a perforated metal, which is a modified example of the removal process member shown in FIG. 7.

### DESCRIPTION OF THE EMBODIMENTS

### 1. All-solid-state Battery

An example of an all-solid-state battery 1 is described. The shape of the all-solid-state battery 1 is not limited to the example as long as the all-solid-state battery 1 is an all-solid-state battery produced according to the present invention [1].

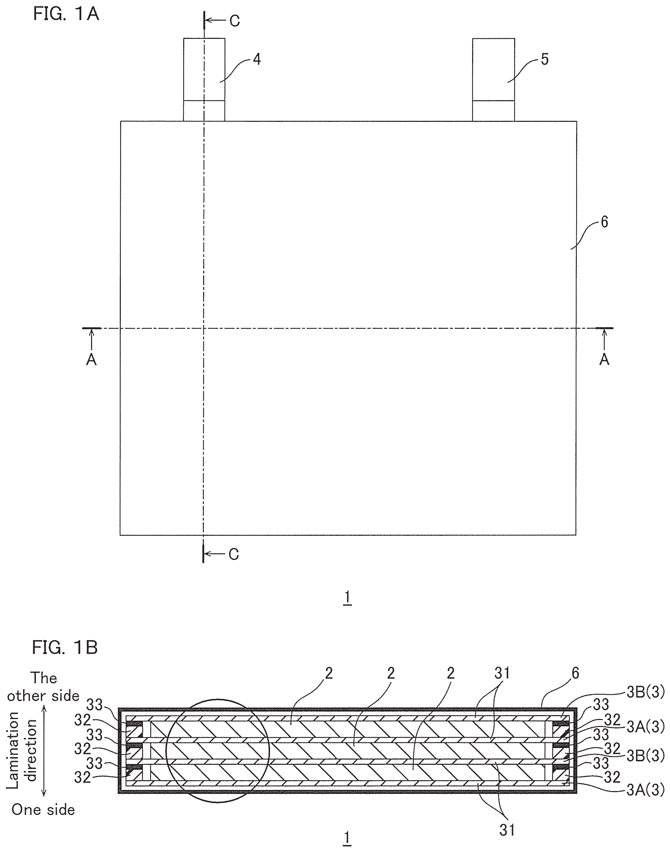

As shown in FIGS. 1A and 1B, the all-solid-state battery 1 includes a plurality of electrode laminates 2, a plurality of current collectors 3, a positive electrode lead 4, a negative electrode lead 5, and an exterior material 6.

### (1) Electrode Laminate

In the present embodiment, the electrode laminate 2 has a sheet shape. The electrode laminate 2 has a substantially rectangular shape when viewed from a thickness direction of the electrode laminate 2. The shape of the electrode laminate 2 is not limited. The electrode laminate 2 may have a board shape or may have a film shape. Alternatively, the electrode laminate 2 may have a substantially circular shape when viewed from the thickness direction of the electrode laminate 2.

The electrode laminate 2 has a thickness of, for example, 100 µm or more, preferably 200 µm or more, and, for example, 1000 µm or less, preferably 800 µm or less.

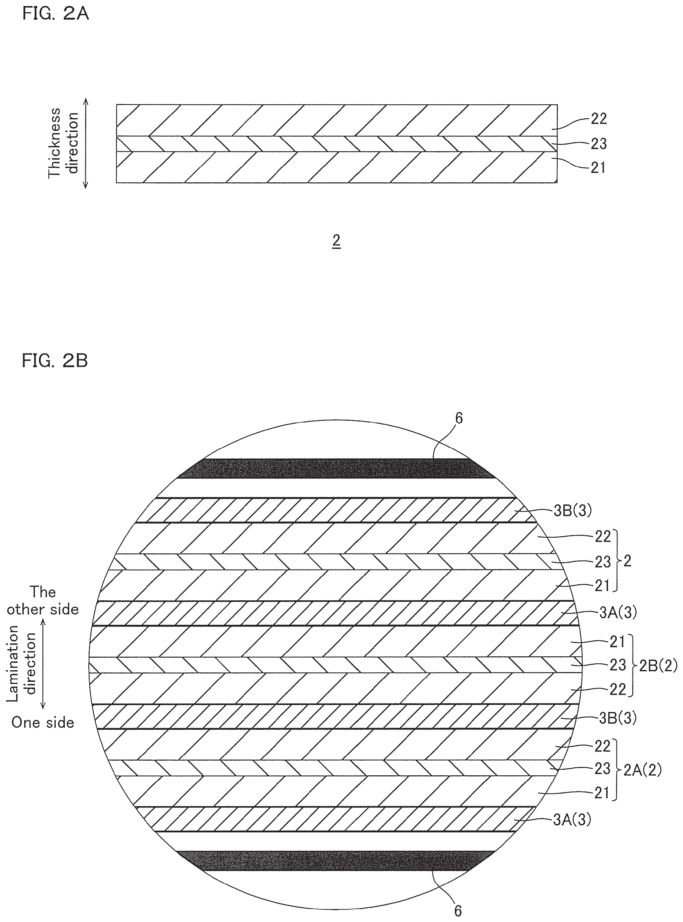

As shown in FIG. 2A, the electrode laminate 2 includes a positive electrode layer 21, a negative electrode layer 22, and a solid electrolyte layer 23. The electrode laminate 2 consists of the positive electrode layer 21, the negative electrode layer 22, and the solid electrolyte layer 23. The electrode laminate 2 includes the solid electrolyte layer 23 between the positive electrode layer 21 and the negative electrode layer 22.

### (1-1) Positive Electrode Layer

The positive electrode layer 21 is disposed away from the negative electrode layer 22 in the thickness direction of the electrode laminate 2. The positive electrode layer 21 is disposed on the opposite side to the negative electrode layer 22 with respect to the solid electrolyte layer 23 in the thickness direction of the electrode laminate 2. The positive electrode layer 21 is in contact with the solid electrolyte layer 23 and not in contact with the negative electrode layer 22.

The positive electrode layer 21 is made of a powder containing a positive electrode active material. The positive electrode layer 21 may contain a resin such as a binder. In the present embodiment, the positive electrode layer 21 is made of a mixture (positive electrode composite material) of a powder of a positive electrode active material and a powder of a solid electrolyte. The positive electrode layer 21 may contain conductive additives. The positive electrode layer 21 may not contain a solid electrolyte. The positive electrode layer 21 may only consist of a positive electrode active material.

Examples of the positive electrode active material include a lithium-containing oxide. Examples of the lithium-containing oxide include lithium-nickel composite oxide (LiNi_{X}M_{1-X}O₂), lithium cobalt oxide (LiCoO₂), lithium nickel oxide (LiNiO₂), lithium-nickel-cobalt-aluminum composite oxide (LiNi_{0.8}Co_{0.15}Al_{0.05}O₂, NCA-based layered oxide), lithium manganese oxide (spinel-type lithium manganese oxide (LiMn₂O₄)), and composite oxide with an excess of Li (Li₂MnO₃-LiMO₂).

The positive electrode active material is not limited to a lithium-containing oxide as long as it is a material into/from which lithium ions can be intercalated and deintercalated. Examples of the positive electrode active material include an olivine-based compound (LiMPO₄) and a sulfur-containing compound (Li₂S).

In the above chemical formulas, M represents a transition metal.

As the positive electrode active material, a lithium-containing oxide containing at least one selected from the group consisting of Co, Ni, and Mn is preferably used from the viewpoint of easily obtaining a high capacity.

In addition, from the viewpoint of improving the rate characteristics, the surface of the positive electrode active material may be coated with a coating material.

Examples of the coating material include Li₄Ti₅O₁₂, LiTaO₃, Li₄NbO₃, LiAlO₂, Li₂ZrO₃, Li₂WO₄, Li₂TiO₃, Li₂B₄O₇, Li₃PO₄, Li₂MoO₄, LiBO₂, alumina (Al₂O₃), and carbon (C).

The positive electrode active materials may be used alone or in combination of two or more.

The solid electrolyte exhibits lithium ion conductivity. Examples of the solid electrolyte include an organic solid electrolyte and an inorganic solid electrolyte.

Examples of the inorganic solid electrolyte include sulfide, oxide, nitride, and hydride.

Examples of the sulfide include a sulfide containing Li₂S and another sulfide containing at least one element selected from the group consisting of elements in Groups 13, 14, and 15 of the periodic table.

Examples of elements in Groups 13, 14, and 15 of the periodic table include P, Si, Ge, As, Sb, and Al, and preferably P, Si, and Ge are used, and more favorably P is used.

Specifically, examples of the sulfide include Li₂S-SiS₂, Li₂S-P₂S₅, Li₂S-GeS₂, Li₂S-B₂S₃, Li₂S-Ga₂S₃, Li₂S-Al₂S₃, Li₂S-GeS₂-P₂S₅, Li₂S-Al₂S₃-P₂S₅, Li₂S-P₂S₃, Li₂S-P₂S₃-P₂S₅, LiX-Li₂S-P₂S₅, LiX-Li₂S-SiS₂, and LiX-Li₂S-B₂S₃ (X: I, Br or Cl).

As the solid electrolyte, preferably the inorganic solid electrolyte is used, and more preferably, the sulfide is used. The solid electrolytes may be used alone or in combination of two or more. The ratio of the positive electrode active material to the solid electrolyte is not limited.

A thickness of the positive electrode layer 21 is, for example, 50 µm or more, preferably 100 µm or more. The thickness of the positive electrode layer 21 is, for example, 500 µm or less, preferably 300 µm or less.

### (1-2) Negative Electrode Layer

The negative electrode layer 22 is disposed away from the positive electrode layer 21 in the thickness direction of the electrode laminate 2. The negative electrode layer 22 is disposed on the opposite side to the positive electrode layer 21 with respect to the solid electrolyte layer 23 in the thickness direction of the electrode laminate 2. The negative electrode layer 22 is in contact with the solid electrolyte layer 23 and not in contact with the positive electrode layer 21.

The negative electrode layer 22 is made of a powder containing a negative electrode active material. The negative electrode layer 22 may contain a resin such as a binder. In the present embodiment, the negative electrode layer 22 is made of a mixture (negative electrode composite material) of a powder of the negative electrode active material and a powder of the solid electrolyte. The negative electrode layer 22 may contain conductive additives. The negative electrode layer 22 may not contain a solid electrolyte. The negative electrode layer 22 may only consist of the negative electrode active material.

The negative electrode active material is not limited as long as it is a material into/from which lithium ions can be intercalated and deintercalated. Examples of the negative electrode active material include a carbon material, a metal and an alloy thereof, a metalloid, and a compound of a metal or a metalloid.

Examples of the carbon material include graphite (natural graphite, artificial graphite), hard carbon, and amorphous carbon. Examples of the metal and the alloy thereof include lithium and an alloy thereof. Examples of the metalloid include silicon. Examples of the compound of a metal or a metalloid include oxide, sulfide, nitrogen, hydrate, and silicide (lithium silicide) of metals or metalloids. Examples of the oxide of a metal or a metalloid include titanium oxide and silicon oxide.

The negative electrode active materials may be used alone or in combination of two or more. As the negative electrode active material, for example, a silicon oxide and a carbon material can be used in combination.

Examples of the solid electrolyte contained in the negative electrode layer 22 include the above-described solid electrolytes. Preferably, the solid electrolyte contained in the negative electrode layer 22 is the same as the solid electrolyte contained in the positive electrode layer 21. The ratio of the negative electrode active material to the solid electrolyte is not limited.

The thickness of the negative electrode layer 22 is approximately the same as the thickness of the positive electrode layer 21. The thickness of the negative electrode layer 22 is, for example, 50 µm or more, and preferably 100 µm or more. The thickness of the negative electrode layer 22 is, for example, 500 µm or less, preferably 300 µm or less.

### (1-3) Solid Electrolyte Layer

The solid electrolyte layer 23 is disposed between the positive electrode layer 21 and the negative electrode layer 22 in the thickness direction of the electrode laminate 2. The solid electrolyte layer 23 is made of a powder of the solid electrolyte. The solid electrolyte layer 23 may contain a resin such as a binder.

Examples of the solid electrolyte include the above-described solid electrolytes. Preferably, the solid electrolyte is the same as the solid electrolyte contained in the positive electrode layer 21.

The solid electrolyte layer 23 is thinner than the positive electrode layer 21 and the negative electrode layer 22. A thickness of the solid electrolyte layer 23 is, for example, 10 µm or more, and preferably 30 µm or more. The thickness of the solid electrolyte layer 23 is, for example, 300 µm or less, preferably 100 µm or less.

### (2) Current Collector

As shown in FIG. 2B, in parallel connection, each of the plurality of current collectors 3 is laminated alternately with each of the plurality of electrode laminates 2. The plurality of current collectors 3 include a positive current collector 3A and a negative current collector 3B. The positive current collector 3A is in contact with the positive electrode layer 21 of the electrode laminate 2. The negative current collector 3B is in contact with the negative electrode layer 22 of the electrode laminate 2.

Specifically, in the present embodiment, from one side to the other side in a lamination direction in which the electrode laminates 2 and the current collectors 3 are laminated, a positive current collector 3A, a first electrode laminate 2A, a negative current collector 3B, a second electrode laminate 2B, and a positive current collector 3A are laminated in order. In the lamination direction, one negative current collector 3B is disposed between the negative electrode layer 22 of the first electrode laminate 2A and the negative electrode layer 22 of the second electrode laminate 2B. That is, in the lamination direction, one current collector 3 is disposed between two electrode laminates 2. In series connection, a plurality of electrode laminates 2 are laminated so that the positive electrode layer 21, the solid electrolyte layer 23, and the negative electrode layer 22 are laminated in the same order, and the current collector 3 is only disposed on the uppermost layer and the lowermost layer.

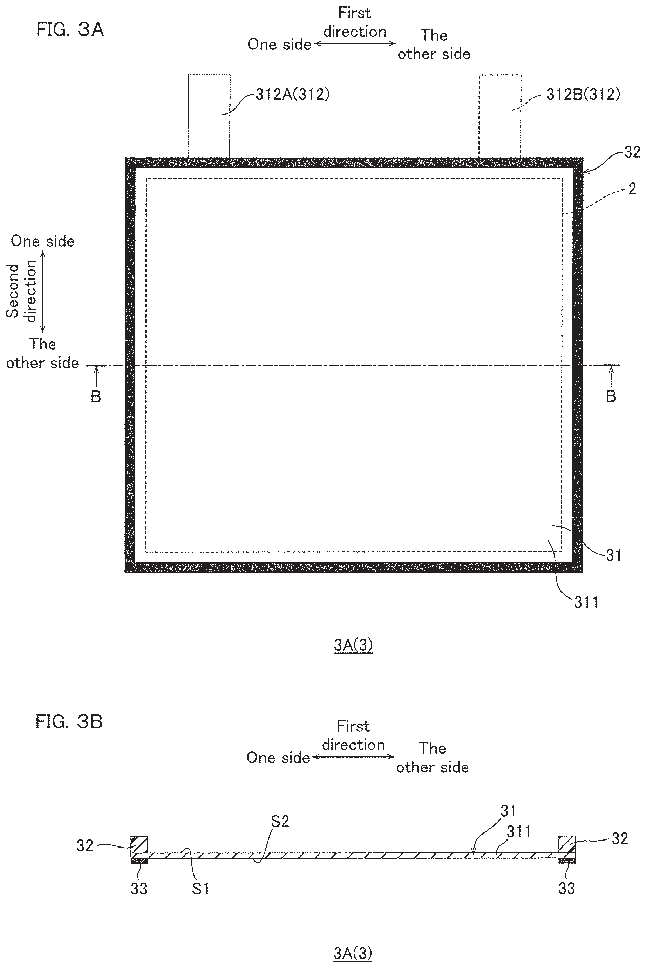

As shown in FIGS. 3A and 3B, the current collector 3 includes a conductor 31, an insulating member 32, and an adhesive layer 33.

### (2-1) Conductor

The conductor 31 is, for example, made of a metal. The conductor 31 includes a laminate portion 311 and a tab 312.

The laminate portion 311 extends in a first direction and a second direction. The first direction is perpendicular to the lamination direction. The second direction is perpendicular to both the first direction and the lamination direction. The laminate portion 311 has a sheet shape. The laminate portion 311 includes a one-side surface S1 and an other-side surface S2 in the thickness direction. In other words, the conductor 31 includes the one-side surface S1 and the other-side surface S2 in the thickness direction. The laminate portion 311 is in contact with the electrode laminate 2. When the current collector 3 is a positive current collector 3A, the laminate portion 311 is in contact with the positive electrode layer 21 of the electrode laminate 2. When the current collector 3 is a negative current collector 3B, the laminate portion 311 is in contact with the negative electrode layer 22 of the electrode laminate 2.

The tab 312 is disposed on an edge of the laminate portion 311. In the present embodiment, the tab 312 is disposed on an edge at one side of the laminate portion 311 in the second direction. The tab 312 protrudes from the edge of the laminate portion 311. The tab 312 may be a different member from the laminate portion 311, and may be bonded with the laminate portion 311. The tab 312 has a belt shape. The tab 312 is not in contact with the electrode laminate 2. When the current collector 3 is a positive current collector 3A, the conductor 31 has a positive electrode tab 312A as the tab 312. When the current collector 3 is a negative current collector 3B, the conductor 31 has a negative electrode tab 312B as the tab 312. In a state in which the electrode laminate 2, the positive current collector 3A, and the negative current collector 3B are laminated, the negative electrode tab 312B is disposed away from the positive electrode tab 312A. In a state in which the electrode laminate 2, the positive current collector 3A, and the negative current collector 3B are laminated, the negative electrode tab 312B does not overlap the positive electrode tab 312A in the lamination direction.

A thickness of the conductor 31 is, for example, 1 µm or more, preferably 5 µm or more, and, for example, 100 µm or less, preferably 50 µm or less.

Examples of the material for the conductor 31 include copper (Cu), magnesium (Mg), stainless steel, titanium (Ti), iron (Fe), cobalt (Co), nickel (Ni), zinc (Zn), aluminum (Al), germanium (Ge), indium (In), lithium (Li), tin (Sn), and alloys thereof.

### (2-2) Insulating Member

As shown in FIG. 3B, the insulating member 32 is laminated on the one-side surface S1 of the conductor 31. As shown in FIG. 3A, the insulating member 32 is disposed on the laminate portion 311 of the conductor 31. The insulating member 32 is laminated on the peripheral edge portion of the laminate portion 311 of the conductor 31. The insulating member 32 has a substantially rectangular frame shape when viewed from the lamination direction. The insulating member 32 is not disposed on the tab 312 of the conductor 31.

In a state in which the electrode laminate 2, the positive current collector 3A, and the negative current collector 3B are laminated, the insulating member 32 is disposed around the electrode laminate 2. As shown in FIG. 1B, in a state in which the electrode laminate 2, the positive current collector 3A, and the negative current collector 3B are laminated, the insulating member 32 is disposed between the positive current collector 3A and the negative current collector 3B in the lamination direction. In a state in which the electrode laminate 2, the positive current collector 3A, and the negative current collector 3B are laminated, the insulating member 32 insulates the positive current collector 3A from the negative current collector 3B.

In the lamination direction, the thickness of the insulating member 32 is thinner than the thickness of the electrode laminate 2. When the current collector 3 does not include an adhesive layer 33, the thickness of the insulating member 32 may be the same as the thickness of the electrode laminate 2. The thickness of the insulating member 32 is, for example, 50 µm or more, preferably 75 µm or more, and, for example, 500 µm or less, preferably 400 µm or less.

Examples of the material for the insulating member 32 include polyethylene terephthalate and polyimide.

### (2-3) Adhesive Layer

As shown in FIG. 3B, the adhesive layer 33 is laminated on the other-side surface S2 of the conductor 31 in the peripheral edge portion of the conductor 31. The current collector 3 may not include an adhesive layer 33. As shown in FIG. 1B, in a state in which one electrode laminate 2 is laminated between two current collectors 3, the adhesive layer 33 of the current collector 3 disposed at the other side of the electrode laminate 2 in the lamination direction is adhered to the insulating member 32 of the current collector 3 disposed at one side of the electrode laminate 2 in the lamination direction.

The total sum of the thickness of the adhesive layer 33 and the thickness of the insulating member 32 is the thickness of the electrode laminate 2 or less. The thickness of the adhesive layer 33 is, for example, 30 µm or more, preferably 50 µm or more, and, for example, 300 µm or less, preferably 200 µm or less.

The adhesive layer 33 is preferably insulating. Examples of the material for the adhesive layer 33 include resins such as acrylic, polyimide, and silicone, and nonwoven fabrics impregnated with these resins.

### (3) Positive Electrode Lead and Negative Electrode Lead

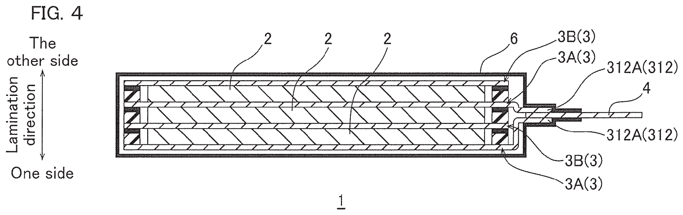

As shown in FIG. 1A, a portion of the positive electrode lead 4 is exposed from the exterior material 6. As shown in FIG. 4, the positive electrode lead 4 is bonded to the positive electrode tab 312A in the exterior material 6. Thus, the positive electrode lead 4 is electrically connected to the positive current collector 3A. The positive electrode lead 4 is not connected to the negative current collector 3B.

As shown in FIG. 1A, a portion of the negative electrode lead 5 is exposed from the exterior material 6. The negative electrode lead 5 is bonded to the negative electrode tab 312B (see FIG. 3A) in the exterior material 6. Thus, the negative electrode lead 5 is electronically connected to the negative current collector 3B (see FIG. 1B). The negative electrode lead 5 is not connected to the positive current collector 3A.

Each of the positive electrode lead 4 and the negative electrode lead 5 has, for example, a substantially rectangular flat board shape. Examples of the material for the positive electrode lead 4 and the negative electrode lead 5 include pure metals, and alloys. Examples of the pure metals include copper, nickel, aluminum, gold, and platinum. Examples of the alloys include an alloy of the above-described pure metals, stainless steel, and a titanium alloy. The positive electrode lead 4 and negative electrode lead 5 may be plated. For example, the positive electrode lead 4 and negative electrode lead 5 may be a copper plate with a nickel-plated layer and a gold-plated layer.

### (4) Exterior Material

As shown in FIGS. 1A and 1B, the exterior material 6 covers the laminate of the electrode laminates 2 and the current collectors 3. Examples of the exterior material 6 include a metal laminate film in which a resin film is laminated on both surfaces of a metal foil.

### 2. Method of Producing All-solid-state Battery

Next, a method of producing the above-described all-solid-state battery 1 is described.

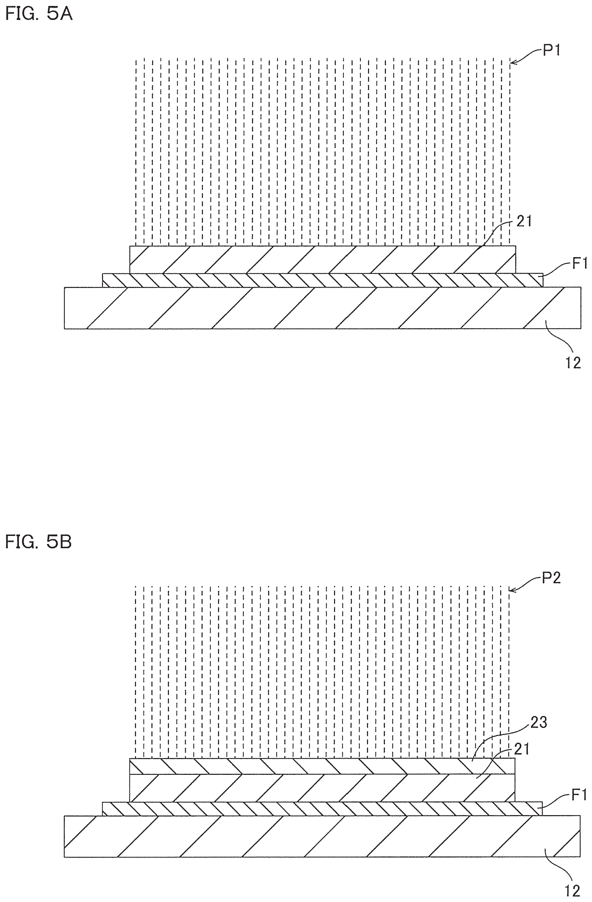

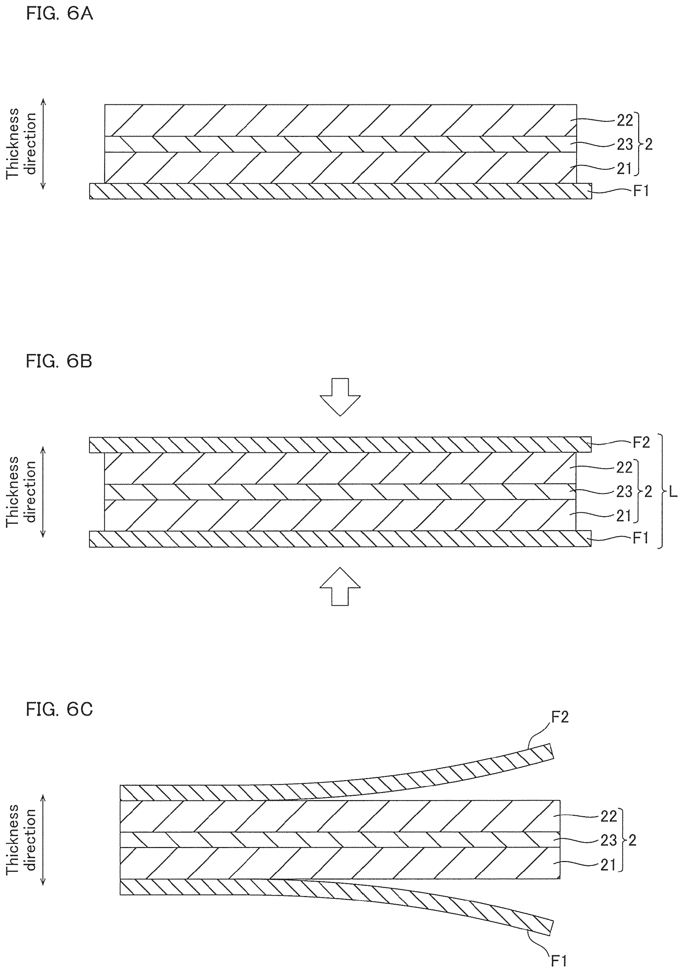

The method of producing the all-solid-state battery 1 includes a block forming step, an electrode laminate forming step (see FIGS. 5A to 6A), a press step (see FIG. 6B), a cutting step, a peeling step (see FIG. 6C), and a laminating step.

### (1) Block Forming Step

In the block forming step, a powder material is compressed to form a block. Examples of the powder material include a solid electrolyte powder, a positive electrode composite material, and a negative electrode composite material.

In the block forming step, preferably, the powder material is compressed in a dry method. specifically, in the block forming step, the powder material is pressure-formed. Other examples of the formation include a method of pouring a medium in which the powder material is dispersed into a mold, and then solidifying the powder material by drying and vaporizing the medium, and a method of putting the powder material in a mold and baking (sintering) the powder material by heating.

Examples of the pressure-forming method include a uniaxial pressure forming method, a biaxial pressure forming method, and a cold isostatic pressure forming method (CIP method). As the pressure-forming method, preferably, a biaxial pressure forming method is used.

Examples of the pressing method include mechanical press, hydraulic press, and vibration press. As the pressing method, preferably, vibration press is used.

In the block forming step, preferably, the powder material is pressure-formed using the vibration press of the biaxial pressure forming method. Using the vibration press of the biaxial pressure forming method can suppress a nonhomogeneous density of the block produced.

The pressure of the pressure-forming is, for example, 100 MPa or less, preferably 50 MPa or less, more preferably 20 MPa or less. The pressure of the pressure-forming is, for example, 1 MPa or more, preferably 5 MPa or more. The range of the pressure of the pressure-forming is 1 MPa to 100 MPa, 5 MPa to 50 MPa, or 5 MPa to 20 MPa.

When the pressure of the pressure-forming is the above-described upper limit or less, it is possible to suppress an excessive hardening of the block, and thus facilitate the removal process of the block of the powder material in the electrode laminate forming step. When the pressure of the pressure-forming is the above-described lower limit or more, it is possible to suppress easy breakage of the block, and ensure the handleability of the block.

### (2) Electrode Laminate Forming Step

As shown in FIG. 5A to FIG. 6A, in the electrode laminate forming step, the block produced in the block forming step is subjected to a removal process to produce a powder and the powder is deposited on the first substrate F1, preferably, in a dry method, thereby forming an electrode laminate 2.

In detail, as shown in FIG. 5A, the block of the positive electrode composite material is subjected to a removal process to produce a powder P1, and the powder P1 is deposited on the first substrate F1, thereby forming a positive electrode layer 21 on the first substrate F1. Examples of the removal process include cutting processing, grinding processing, and polishing processing. In addition, the removal process is not limited to cutting processing, grinding processing, and polishing processing. The removal process is not limited, and can be any process that can produce a powder by subjecting the block to a removal process.

In the electrode laminate forming step, the powder P1 produced by subjecting the block to the removal process may be moved onto the first substrate F1 by electrostatic force.

Next, as shown in FIG. 5B, the block of the solid electrolyte is subjected to a removal process to produce a powder P2, and the powder P2 is deposited on the positive electrode layer 21, thereby forming a solid electrolyte layer 23 on the positive electrode layer 21.

Next, the block of the negative electrode composite material is subjected to a removal process to produce a powder, and the powder is deposited on the solid electrolyte layer 23, thereby forming a negative electrode layer 22 (see FIG. 6A) on the solid electrolyte layer 23.

In this manner, as shown in FIG. 6A, an electrode laminate 2 is formed on the first substrate F1.

The material for the first substrate F1 is not limited. Examples of the material for the first substrate F1 include a metal foil. Examples of the metal foil include aluminum foil.

As long as the electrode laminate 2 can be formed, the order of forming the positive electrode layer 21, the negative electrode layer 22, and the solid electrolyte layer 23 is not limited. A negative electrode layer 22 may be formed on the first substrate F1, and a solid electrolyte layer 23 may be formed on the negative electrode layer 22, and then a positive electrode layer 21 may be formed on the solid electrolyte layer 23.

### (2) Press Step

The press step is carried out after the electrode laminate forming step. As shown in FIG. 6B, in the press step, a second substrate F2 is laminated on the electrode laminate 2, and a resulting laminate L is pressed. The resulting laminate L is a laminate of the first substrate F1, the electrode laminate 2, and the second substrate F2.

The material for the second substrate F2 may be the same as or different from the material for the first substrate F1.

The pressure to be applied to the laminate L is not limited as long as the electrode laminate 2 can be formed. The pressure to be applied to the laminate L is, for example, 100 MPa or more, preferably 500 MPa or more, and, for example, 5000 MPa or less, preferably 3000 MPa or less. Electric charge and discharge of the laminate L may be carried out for performance confirmation after the press step.

### (3) Cutting Step

The cutting step is carried out after the press step. In the cutting step, the electrode laminate 2 is cut into a desired shape. In the present embodiment, the electrode laminate 2 is cut into a substantially rectangular shape when viewed from the thickness direction of the electrode laminate 2. The cutting step may not be carried out.

### (4) Peeling Step

The peeling step is carried out after the cutting step. The peeling step may be carried out before the cutting step. In the peeling step, as shown in FIG. 6C, at least one of the first substrate F1 and the second substrate F2 is peeled from the electrode laminate 2. In the present embodiment, both the first substrate F1 and the second substrate F2 are peeled from the electrode laminate 2. To suppress the collapse of the electrode laminate 2, only one of the first substrate F1 and the second substrate F2 may be peeled from the electrode laminate 2. The peeling step may not be carried out. In such a case, in the laminating step, the first substrate F1 and the second substrate F2 may be used as the current collector 3.

### (5) Laminating Step

In the laminating step, as shown in FIG. 1B, the electrode laminate 2 and the current collector 3 (see FIG. 3B) are alternately laminated. A desired number of electrode laminates 2 and a desired number of current collectors 3 are laminated, and then the laminating step is completed.

After the laminating step, as shown in FIG. 4, the positive electrode tab 312A is bonded to the positive electrode lead 4, the negative electrode tab 312B is bonded to the negative electrode lead 5, and the laminate of the electrode laminates 2 and the current collectors 3 is vacuum-packed in the exterior material 6.

As described above, the production of the above-described all-solid-state battery 1 is completed.

### 3. Production Apparatus for Producing All-solid-state Battery

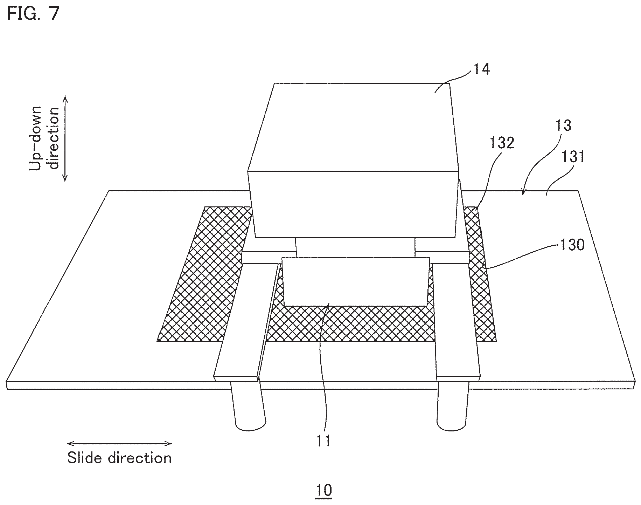

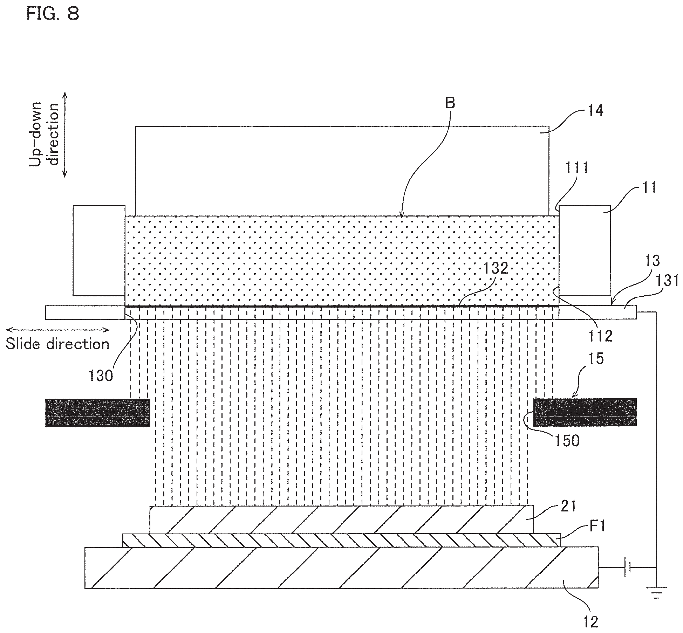

Next, in reference to FIGS. 7 and 8, a production apparatus 10 which is used in the electrode laminate forming step of the above-described method of producing the all-solid-state battery 1 is described.

The production apparatus 10 includes a block supporting member 11, a support table 12 (see FIG. 8), a removal process member 13, a pressing member 14, and a mask member 15 (see FIG. 8).

### (1) Block Supporting Member

As shown in FIG. 8, the block supporting member 11 supports a block B. In the present embodiment, the block supporting member 11 has a tubular shape in which the block B can be accommodated. The block supporting member 11 extends in an up-down direction. The block supporting member 11 has an inlet 111 and an outlet 112. The inlet 111 is disposed in an upper end portion of the block supporting member 11. The block B is set in the block supporting member 11 through the inlet 111. The outlet 112 is disposed in a lower end portion of the block supporting member 11. The block B in the block supporting member 11 faces the removal process member 13 through the outlet 112. The shape of the block supporting member 11 is not limited as long as the position of the block B can be determined with respect to the removal process member 13. In the present embodiment, the block supporting member 11 is fixed with respect to the support table 12.

### (2) Support Table

As shown in FIG. 8, the support table 12 is disposed away from the block supporting member 11 in the up-down direction. The support table 12 supports the first substrate F1. The support table 12 is made of metal. A predetermined voltage is applied to the support table 12.

### (3) Removal Process Member

As shown in FIG. 8, the removal process member 13 faces the outlet 112 of the block supporting member 11. The removal process member 13 is disposed between the block supporting member 11 and the support table 12 in the up-down direction. In a state in which the block B is set in the block supporting member 11, and the first substrate F1 is set on the support table 12, the removal process member 13 is disposed between the block B and the first substrate F1 in the up-down direction. The removal process member 13 is capable of moving or vibrating with respect to the block supporting member 11 in the horizontal direction. The horizontal movement may be a slide (linear motion) or a rotation. That is, the removal process member 13 is capable of sliding, rotating, or vibrating with respect to the block supporting member 11. The direction in which the removal process member 13 slides is defined as a slide direction. In a state in which the block B is set in the block supporting member 11, the removal process member 13 is in contact with the block B. In a state in which the block B in the block supporting member 11 is in contact with the removal process member 13, the removal process member 13 moves with respect to the block supporting member 11. By that, the removal process member 13 subjects the block B supported by the block supporting member 11 to a removal process. A predetermined voltage is applied to the removal process member 13 so that an electric field is created between the removal process member 13 and the support table 12. Examples of the removal process member 13 include a cutting member, a grinding member, and a polishing member.

In the present embodiment, as shown in FIG. 7, the removal process member 13 includes a frame 131 and a mesh 132.

The frame 131 has a substantially rectangular flat board shape. The frame 131 is made of metal. The frame 131 has an opening 130.

In the present embodiment, the mesh 132 is a mesh made of metal. The mesh 132 covers the opening 130 of the frame 131. In a state in which the block B in the block supporting member 11 is in contact with the mesh 132, the removal process member 13 moves with respect to the block supporting member 11. By that, the mesh 132 subjects the block B supported by the block supporting member 11 to a removal process. As shown in FIG. 8, the powder produced by subjecting the block B to the removal process is deposited on the first substrate F1 through the mesh 132.

### (4) Pressing Member

The pressing member 14 is disposed on the opposite side to the removal process member 13 with respect to the block B. The pressing member 14 presses the block B supported by the block supporting member 11 toward the removal process member 13. In the present embodiment, the pressing member 14 is a weight made of metal. As long as the block B can be pressed toward the removal process member 13, the pressing member 14 is not limited. The pressing member 14 may not be a weight. The pressing member 14 may be a piston pressed against the block B by an air cylinder.

### (5) Mask Member

The mask member 15 is disposed between the block supporting member 11 and the first substrate F1, as necessary. The mask member 15 is disposed between the removal process member 13 and the first substrate F1. The mask member 15 has an opening 150. The powder produced by subjecting the block B to the removal process is allowed to pass through the opening 150. The opening 150 is smaller than the opening 130 of the frame 131 of the removal process member 13. The shape of the opening 150 is not limited as long as the electrode laminate 2 having a desired shape can be produced. In the present embodiment, the opening 150 has a rectangular shape so that a rectangular electrode laminate 2 can be produced.

### 4. Operations and Effects

(1) According to the method of producing the all-solid-state battery 1, and the production apparatus 10 for producing the all-solid-state battery 1, as shown in FIG. 8, the density of the powder material is homogenized in the block forming step, the block B of the powder material is subjected to a removal process in the electrode laminate forming step, and the resulting powder is deposited on the first substrate F1.

Therefore, it is possible to lower the impact of the physical properties of the powder such as fluidity, and thus control the amount of the powder to be supplied on the first substrate F1 depending on the amount of the block B shaved.

As a result, it is possible to stabilize the amount of the powder supplied on the first substrate F1, and thus form the powder layer (the positive electrode layer 21, the negative electrode layer 22, or the solid electrolyte layer 23) with a uniform thickness.

(2) According to the method of producing the all-solid-state battery 1, a powder material is pressure-formed in the block forming step.

In this manner, it is possible to homogenize the density of the block B, stabilize the amount of the powder supplied on the first substrate F1, and make the thickness of the powder layer uniform.

(3) According to the method of producing the all-solid-state battery 1, the powder material is pressure-formed by vibration press in the block forming step.

In this manner, it is possible to further homogenize the density of the block B, further stabilize the amount of the powder supplied on the first substrate F1, and further make the thickness of the powder layer uniform.

(4) According to the method of producing the all-solid-state battery 1, the powder material is pressure-formed at 100 MPa or less in the block forming step.

In this manner, it is possible to suppress an excessive hardening of the block B, and thus facilitate the removal process of the block B in the electrode laminate forming step.

(5) According to the method of producing the all-solid-state battery 1 and the production apparatus 10 for producing the all-solid-state battery 1, in the electrode laminate forming step, the powder produced by subjecting the block B to the removal process is moved on the first substrate F1 by electrostatic force.

In this manner, it is possible to guide the powder produced by subjecting the block B to the removal process onto the first substrate F1 by electrostatic force.

(6) According to the production apparatus 10 for producing the all-solid-state battery 1, as shown in FIG. 8, it is possible to press the block B supported by the block supporting member 11 toward the removal process member 13 by using the pressing member 14.

Therefore, it is possible to stabilize the contact of the block B with the removal process member 13.

(7) According to the production apparatus 10 for producing the all-solid-state battery 1, as shown in FIG. 8, the mask member 15 is disposed between the block supporting member 11 and the first substrate F1.

Therefore, it is possible to deposit the powder on the first substrate F1 into the shape in conformity with the opening 15 of the mask member 15.

### 5. Modified Examples

Hereinafter, modified examples are described. In the modified examples, the same members as in the above-described embodiment are given the same numerical references and the descriptions thereof are omitted.
(1) While supporting the first substrate F1, the support table 12 may be horizontally movable together with the mask member 15. The horizontal movement may be a slide (linear motion) or may be a rotation.

According to the modified example, by the horizontal movement of the support table 12 supporting the first substrate F1, it is possible to deposit the powder on a large area of the first substrate F1.

(2) In the above-described embodiment, the block supporting member 11 is fixed with respect to the support table 12, and the removal process member 13 slides, rotates, or vibrate with respect to the block supporting member 11. In terms of this, the removal process member 13 may be fixed with respect to the support table 12, and the block supporting member 11 may slide, rotate, or vibrate with respect to the removal process member 13.

Also in the modified examples, the same operations and effects as those of the above-described embodiment can be obtained.

(3) The configuration of the removal process member 13 is not limited as long as the block B can be subjected to a removal process.

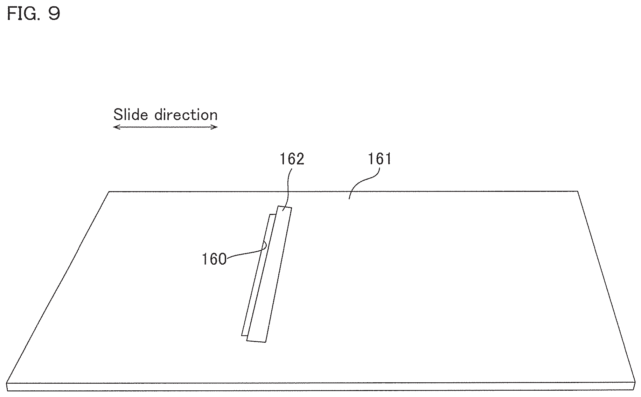

For example, as shown in FIG. 9, the removal process member 13 may include a blade 162 and a frame 161 having a slit 160. The slit 160 extends in a direction intersecting with the slide direction of the removal process member 13. The blade 162 is attached to an edge of the slit 160. The blade 162 extends in a direction intersecting with the slide direction of the removal process member 13. In the modified example, the powder is shaved from the block B with the blade 162, passes through the slit, and is deposited on the first substrate F1.

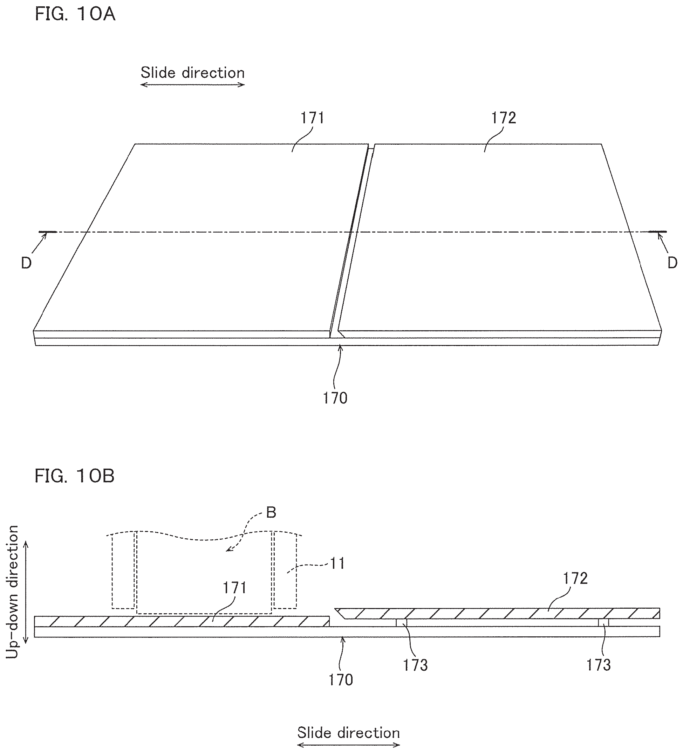

Furthermore, for example, as shown in FIG. 10A and FIG. 10B, the removal process member 13 may include a base frame 170, a support plate 171, a blade 172, and a spacer 173. That is, the removal process member 13 may include a blade 172 in place of the mesh 132. The base frame 170 has a frame shape. The support plate 171 is attached to a one-side half of the base frame 170 in the slide direction of the removal process member 13. The support plate 171 supports the block B (see FIG. 10B). The blade 172 is spaced from the support plate 171 in the slide direction of the removal process member 13. The blade 172 is attached to the other-side half of the base frame 170 in the slide direction of the removal process member 13. The blade 172 extends in a direction intersecting with the slide direction of the removal process member 13. The spacer 173 is disposed between the blade 172 and the base frame 170 in the up-down direction. The spacer 173 places the tip of the blade 172 in a higher position than the upper surface of the support plate 171. In this manner, as shown in FIG. 10B, when the removal process member 13 is slid in a state in which the block is in contact with the upper surface of the support plate 171, this makes it possible to shave the block B with the tip of the blade 172. In the modified example, by using the thickness of the spacer 173, it is possible to adjust the distance between the tip of the blade 172 and the upper surface of the support plate 171 in the up-down direction. By the adjustment of the distance between the tip of the blade 172 and the upper surface of the support plate 171 in the up-down direction, it is possible to adjust the amount to be shaved. As long as the distance between the tip of the blade 172 and the upper surface of the support plate 171 in the up-down direction can be adjusted, the removal process member 13 may not necessarily include a spacer 173. For example, the amount to be shaved may be adjusted by the difference between the thickness of the support plate 171 and the thickness of the blade 172, or the amount to be shaved may be adjusted by adjusting the angle of the blade 172 with respect to the support plate 171.

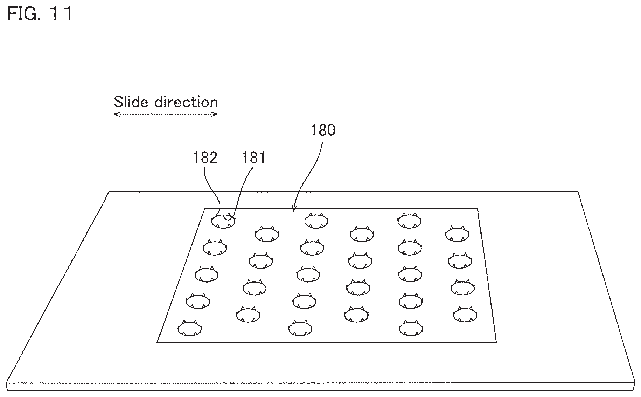

A shown in FIG. 11, the removal process member 13 may include a perforated metal 180 in place of the mesh 132. The perforated metal 180 includes a plurality of through holes 181 and a plurality of blades 182 disposed around each of the through holes 181. In the modified example, the powder is shaved from the block B with the blades 182, passes through the through hole 181, and is deposited on the first substrate F1.

(4) The production apparatus 10 may include a plurality of removal process members 13 having different shapes from each other. Examples of the plurality of removal process members 13 include the above-described removal process member 13 having the mesh 132 (see FIG. 7), the above-described removal process member 13 having the blade 162 or the blade 172 (see FIG. 9 and FIG. 10A), and the above-described removal process member 13 having the perforated metal 180 (see FIG. 11). Furthermore, example thereof may include a removal process member 13 having a plurality of meshes 132 having different openings or different line shapes and a removal process member 13 having a plurality of blades at different blade angles.

According to the modified example, by switching the plurality of removal process members 13, it is possible to optimize the speed at which the block is shaved or the uniformity of the thickness of the powder layer.

(5) The production apparatus 10 may further include a measurement member for measuring the thickness of the block B supported by the block supporting member 11. The measurement member is not limited. The measurement member may be, for example, a scale provided on the inside surface of the block supporting member 11, or may be a sensor for measuring the amount of a stroke of the air cylinder used in the pressing member 14.

According to the modified example, by measuring the thickness of the block B supported by the block supporting member 11, it is possible to calculate the amount of the block B shaved.

Furthermore, it is possible to calculate the amount of the powder deposited and the thickness of the powder layer from the amount of the block B shaved.

(6) The positive electrode layer 21, the negative electrode layer 22, and the solid electrolyte layer 23 may be formed by different methods with each other. For example, a positive electrode layer 21 may be formed by electrostatic screen printing. On the positive electrode layer 21, a solid electrolyte layer 23 may be formed by laminating the powder produced by subjecting the solid electrolyte block B to a removal process. On the solid electrolyte layer 23, a negative electrode layer 22 may be formed by electrostatic screen printing.

Alternatively, a positive electrode layer 21 may be applied onto a first substrate F1, for example, with a coater. On the positive electrode layer 21, a solid electrolyte layer 23 may be formed by laminating the powder produced by subjecting the solid electrolyte block B to a removal process. Then a negative electrode layer 22 may be applied onto a second substrate F2, for example, with a coater, and disposed on the solid electrolyte layer 23.

Alternatively, a positive electrode layer 21 may be formed by laminating the powder produced by subjecting the block B of the positive electrode composite material to a removal process. On the positive electrode layer 21, a solid electrolyte layer 23 may be formed by laminating the powder produced by subjecting the solid electrolyte block B to a removal process. Then, a sheet made of silicone or lithium metal is disposed as a negative electrode layer 22 on the solid electrolyte layer 23.

(7) In the block forming step, a block may be formed by flocculating the powder material to form a first granulated body, and compressing the first granulated body.
Alternatively, in the block forming step, a block may be formed by flocculating the powder material to form a first granulated body and crushing the first granulated body to form a second granulated body smaller than the first granulated body, and compressing the second granulated body.

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

### Industrial Applicability

The method of producing an all-solid-state battery of the present invention and the production apparatus for producing an all-solid-state battery of the present invention can be used for producing an all-solid-state battery.

### Description of Reference Numerals

- 1: All-solid-state battery
- 2: Electrode laminate
- 3: Current collector
- 10: Production apparatus
- 11: Block supporting member
- 12: Support table
- 13: Removal processing member
- 14: Pressing member
- 15: Mask member

## Claims

1. A method of producing an all-solid-state battery, the method comprising:
a block forming step of compressing a powder material to form a block;
an electrode laminate forming step of producing a powder by subjecting the block to a removal process, and depositing the powder on a substrate to form an electrode laminate; and
a laminating step of laminating the electrode laminate and a current collector.

2. The method according to claim 1, wherein in the block forming step, the powder material is pressure-formed.

3. The method according to claim 2,
wherein in the block forming step, the powder material is pressure-formed by vibration press.

4. The method according to claim 2,
wherein in the block forming step, the powder material is pressure-formed at 100 MPa or less.

5. The method according to claim 1,
wherein in the electrode laminate forming step, the powder produced by subjecting the block to a removal process is moved onto the substrate by electrostatic force.

6. A production apparatus for producing an all-solid-state battery, the production apparatus used in the method according to any one of claims 1 to 5, the production apparatus comprising:
a block supporting member that supports the block;
a support table that is disposed away from the block supporting member, and supports the substrate; and
a removal process member that subjects the block supported by the block supporting member to a removal process.

7. The production apparatus according to claim 6, further comprising:
a pressing member that presses the block supported by the block supporting member toward the removal process member.

8. The production apparatus according to claim 6, further comprising:
a mask member that is disposed between the block supporting member and the substrate, and has an opening through which the powder produced by subjecting the block to a removal process is allowed to pass.

9. The production apparatus according to claim 6,
wherein the block supporting member is fixed with respect to the support table, and
wherein the removal process member is capable of sliding, rotating, or vibrating with respect to the block supporting member.

10. The production apparatus according to claim 6,
wherein the removal process member is fixed with respect to the support table, and
wherein the block supporting member is capable of sliding, rotating, or vibrating with respect to the removal process member.

11. The production apparatus according to claim 6,
wherein the production apparatus includes a plurality of the removal process members having different shapes from each other.

12. The production apparatus according to claim 6, further comprising:
a measurement member for measuring a thickness of the block supported by the supporting member.

13. The production apparatus according to claim 6,
wherein the support table is capable of sliding or rotating while supporting the substrate.
